# EUROPÄISCHE PATENTSCHRIFT

(11) **EP 0 782 673 B1**
(45) Veröffentlichungstag und Bekanntmachung des Hinweises auf die Patenterteilung: **03.11.1999**
(21) Anmeldenummer: 96906757.8
(22) Anmeldetag: 08.03.1996
(51) Int. Cl.: F15B 21/04, B01D 35/01

(54) **HYDRAULISCHE SCHALTUNG**
HYDRAULIC CIRCUIT
CIRCUIT HYDRAULIQUE

(30) Priorität: 29.03.1995 DE 19511482
(43) Veröffentlichungstag der Anmeldung: 09.07.1997
(73) Patentinhaber: ARGO GmbH für Fluidtechnik, 76703 Kraichtal-Menzingen (DE)
(72) Erfinder: REINHARDT, Hans, D-75015 Bretten (DE)
(74) Vertreter: Wössner, Gottfried, Dr. Dipl.-Chem.
(86) Internationale Anmeldenummer: EP9600995
(87) Internationale Veröffentlichungsnummer: WO9630654

(56) Entgegenhaltungen:
- DE-A- 4 011 913
- DE-B- 1 941 153
- DE-U- 8 700 021
- FR-A- 2 291 784
- US-A- 3 996 137
- OLHYDRAULIK UND PNEUMATIK, Bd. 19, Nr. 5, 1975, MAINZ DE, Seiten 409-412, XP002007021 H.REINHARDT: "bypassventil in hydrofiltern"
- HYDRAULICS AND PNEUMATICS, Bd. 31, Nr. 3, März 1978, CLEVELAND US, Seiten 10-21, XP002007022 "hydraulic filtration"

## Beschreibung

Die Erfindung betrifft eine hydraulische Schaltung mit einem Vorrat an Hydraulikflüssigkeit, welche über eine Pumpe einem Hydraulikverbraucher zur Verfügung gestellt wird, und mit einem ein Filtergehäuse und ein Filterelement umfassenden Rücklauffilter zum Filtern der von dem Verbraucher in einer Rücklaufleitung rücklaufenden Hydraulikflüssigkeit. Eine derartige hydraulische Schaltung ist z.B. aus "Hydraulics and pneumatics", Bd. 31, nr. 3, Seiten 10-21, März 1978 bekannt.

Solche hydraulischen Schaltungen werden in einer Vielzahl von Anwendungen, insbesondere bei hilfskraftbetätigten Maschinen verwendet, einschließlich selbstfahrenden Maschinen, wie z.B. Baumaschinen oder Landmaschinen.

Bei der Inbetriebnahme solcher hydraulischer Schaltungen wurden bislang alle Einzelbestandteile der hydraulischen Schaltung von Hand und separat entlüftet, nachdem zunächst einmal ein Hydraulikvorrat in dem Hydrauliktank eingefüllt war. Dies ist eine arbeitsaufwendige Vorgehensweise, die darüber hinaus beim Anfahren der Anlage wiederholt werden muß, da sich Gasblasen, die zunächst in Teilen der Schaltung gefangen sind, nur allmählich an den Entlüftungsstellen sammeln und entfernt werden können.

Aufgabe der vorliegenden Erfindung ist es, eine Möglichkeit zu schaffen, die Inbetriebnahme der hydraulischen Schaltung und insbesondere der dabei notwendigen Entlüftung zu vereinfachen.

Diese Aufgabe wird erfindungsgemäß dadurch gelöst, daß die Rücklaufleitung vor Eintritt in das Rücklauffilter mit einem ersten Druckhalteventil ausgerüstet wird, welches den Rücklauf der Hydraulikflüssigkeit zum Rücklauffilter erst beim Überschreiten eines vorgegebenen ersten Druckwertes erlaubt, daß die Rücklaufleitung anströmseitig zum ersten Druckhalteventil mit einer zur Atmosphäre führenden Entlüftungsvorrichtung und mit einer ein zweites Druckhalteventil enthaltenden Bypassleitung verbunden ist, welche in den Vorratstank mündet, wobei das zweite Druckhalteventil erst beim Überschreiten eines vorgegebenen zweiten Druckwerts öffnet und den Rücklauf der Hydraulikflüssigkeit am Rücklauffilter vorbei zum Hydraulikflüssigkeitsvorrat gestattet, wobei der zweite Druckwert größer ist als der erste Druckwert, und daß die Entlüftungsvorrichtung ein Ausströmen von Gas in die Atmosphäre erlaubt, jedoch den Austritt von Hydraulikflüssigkeit verhindert.

Mit dieser erfindungsgemäßen hydraulischen Schaltung ist es völlig ausreichend, wenn zunächst die Hydraulikflüssigkeit in den Vorratstank eingefüllt wird und die die Verbraucher versorgenden Pumpen in der Schaltung eingeschaltet werden. Die Pumpen fördern zunächst Luft oder in der Schaltung noch vorhandenes Gas, danach ein Gemisch aus Luft und Hydraulikflüssigkeit und schließlich die reine Hydraulikflüssigkeit. Die Luft bzw. das Luft/Hydraulik-Flüssigkeitsgemisch bzw. die Hydraulikflüssigkeit als solche werden nacheinander durch die Verbraucher gefördert und gelangen über die Rücklaufleitung zur Entlüftungsvorrichtung. Solange Gasanteile in den geförderten Volumen vorhanden sind, läßt die Entlüftungsvorrichtung diese zur Atmosphäre hin austreten. Das erste und das zweite Druckhalteventil verhindern, daß die zunächst geförderten, gasförmigen Anteile des Fördervolumens über das Rücklauffilter bzw. über die Bypassleitung zum Vorratstank gefördert werden. Dadurch bleibt als einziger Weg für die Gasvolumina der Weg durch die Entlüftungsvorrichtung. Sobald jedoch die Hydraulikflüssigkeitssäule bei der Entlüftungsvorrichtung ankommt, d.h. wenn alle Gasanteile aus der Hydraulikschaltung bis zur Stelle der Entlüftungsvorrichtung aus der Schaltung ausgetrieben sind, schließt die Entlüftungsvorrichtung die Verbindung zur Atmosphäre. Ein sich in der Hydraulikschaltung aufbauender Hydraulikflüssigkeitsdruck öffnet zuerst das erste Druckhalteventil und macht damit den Weg frei zum Rücklauffilter. Das zweite Druckhalteventil in der Bypassleitung bleibt in dieser Zeit immer geschlossen. Die Druckwerte, bei denen diese Ventile öffnen, sind beispielsweise um den Faktor 2 oder mehr verschieden. Ein typischer erster Druckwert liegt beispielsweise bei 0,04 bar, während ein typischer zweiter Druckwert bei 2 bis 2,5 bar liegt.

Das zweite Druckhalteventil in seiner Funktion als Druckbegrenzungsventil wird erst dann betätigt, wenn ein Druckanstieg anströmseitig des Rücklauffilters erfolgt, was regelmäßig auf ein verschmutztes Filterelement hinweist. Um eine Überlastung des Filterelements bzw. der Hydraulikschaltung insgesamt zu vermeiden, ist in diesem Fall vorgesehen, daß das Bypassventil (zweites Druckhalteventil) öffnet und so den Weg für die rückströmende Hydraulikflüssigkeit direkt in den Vorratstank schafft.

Bei einer bevorzugten Ausführungsform der hydraulischen Schaltung wird eine Entlüftungsvorrichtung verwendet, welche bei einem Unterdruck in der Schaltung ein Eindringen von Gas in die Schaltung verhindert.

Hiermit kann dann problemlos auch bereits zu Beginn der Inbetriebnahme eine Pumpe in Gang gesetzt werden, welche mit ihrer Saugseite mit der Abstromseite des Rücklauffilters verbunden ist und die Hydraulikflüssigkeit nicht direkt aus dem Vorratstank entnimmt.

In diesem Zusammenhang ist es besonders vorteilhaft, wenn abstromseitig des Rücklauffilters in antiparalleler Schaltung zwei Druckhalteventile angeordnet sind, wobei das erste Druckhalteventil erst bei einem bestimmten abstromseitigen Druck den Weg von Rücklauffilter zum Vorratstank freigibt. Das antiparallel geschaltete Druckhalteventil funktioniert als Nachsaugventil und öffnet bei einem Druckwert, der vorzugsweise deutlich geringer ist als der erste Druckwert (z.B. 0,01 bar), so daß sich in der Anfahrphase die Möglichkeit ergibt, daß auch die mit der Abstromseite des Rücklauffilters verbundene Pumpe Hydraulikflüssigkeit aus dem Vorratstank ansaugen kann. Um das Nachsaugventil, die Pumpe und den daran angeschlossenen Verbraucher vor Verschmutzungen zu schützen, wird vorzugsweise dem Nachsaugventil in seiner Verbindungsleitung zum Vorratstank ein Ventilschutzsieb vorgeschaltet.

Vorzugsweise wird die Entlüftungsvorrichtung in einen Verschluß des Filtergehäuses integriert, so daß praktisch keine zusätzlichen Leitungswege zwischen dem Rücklauffilter und der Entlüftungsvorrichtung existieren, in denen sich gegebenenfalls zusätzliche Gasanteile sammeln könnten.

Weiter bevorzugt ist vorgesehen, daß die Entlüftungsvorrichtung und das erste Druckhalteventil baulich eine Einheit bilden, welche nach Abschluß des Entlüftungsvorganges der Schaltung bzw. nach Abschluß der Inbetriebnahme der hydraulischen Schaltung entfernbar ist.

Damit läßt sich ein Zustand der hydraulischen Schaltung herstellen, wie er üblicherweise für den Normalbetrieb existiert und der zusätzliche Fließwiderstand für die Hydraulikflüssigkeit in Form des ersten Druckhalteventils fällt für den Normalbetrieb weg.

Besonders bevorzugt ist es, die bauliche Einheit aus Entlüftungsvorrichtung und erstem Druckhalteventil in den Verschluß des Filtergehäuses zu integrieren, so daß die bauliche Einheit insgesamt nach Abschluß des Einfahrvorganges entfernt und durch einen normalen Verschluß oder Deckel des Filtergehäuses für den Normalbetrieb ersetzt wird.

Alternativ kann vorgesehen sein, daß die Entlüftungsvorrichtung selber permanent gasdicht verschließbar ist, so daß nach Abschluß des Einfahrvorganges und der vollständigen Entlüftung der hydraulischen Schaltung die Entlüftungsvorrichtung permanent gasdicht für den Normalbetrieb verschlossen wird.

Sollte sich die Notwendigkeit ergeben, die Hydraulikflüssigkeit auszutauschen oder aus sonstigen Gründen die Notwendigkeit bestehen, das System bzw. die hydraulische Schaltung erneut zu entlüften, kann die Entlüftungsvorrichtung wieder ge öffnet werden, und der Entlüftungsvorgang durchgeführt werden wie oben beschrieben.

Diese und weitere Vorteile der Erfindung sind im folgenden anhand der Zeichnung noch näher erläutert. Es zeigen im einzelnen:
- Fig. 1: Ein Blockschema einer erfindungsgemäßen hydraulischen Schaltung;
- Fig. 2: eine Schnittansicht durch ein Rücklauffilter mit einer Entlüftungsvorrichtung in einer erfindungsgemäßen hydraulischen Schaltung;
- Fig. 3: Filter und Entlüftungsvorrichtung aus Fig. 2 in einem weiteren Betriebszustand;
- Fig. 4: Filter gemäß Fig. 2 in einem weiteren Betriebszustand.

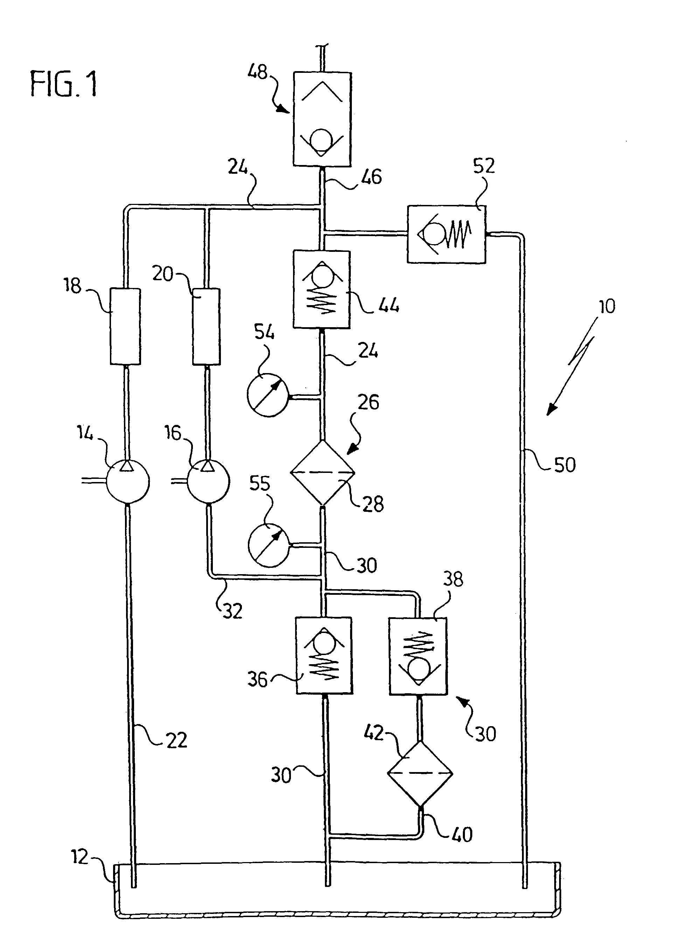

Fig. 1 zeigt eine insgesamt mit dem Bezugszeichen 10 bezeichnete hydraulische Schaltung mit einem Vorratstank 12 für Hydraulikflüssigkeit, Pumpen 14 und 16, welche zwei Verbraucher 18 und 20 mit Hydraulikflüssigkeit versorgen. Dabei ist die Pumpe 14 über eine Saugleitung 22 direkt mit dem Hydraulikflüssigkeitsvorratstank 12 verbunden.

Abstromseitig der Verbraucher 18 und 20 wird die rücklaufende Hydraulikflüssigkeit in einer gemeinsamen Rücklaufleitung 24 zusammengefaßt, welche zu einem Rücklauffilter 26 führt, welches in der Regel ein austauschbares Filterelement 28 umfaßt. Abstromseitig ist das Rücklauffilter 26 mit einer Rücklaufleitung 30 mit dem Vorratstank 12 verbunden. Von der Rücklaufleitung 30 zweigt eine Saugleitung 32 für die Versorgung der Pumpe 16 mit Hydraulikflüssigkeit ab. Stromabwärts von dieser Verzweigung ist ein Doppel-Druckhalteventil in antiparalleler Schaltung in die Rücklaufleitung 30 integriert, wobei das Doppel-Druckhalteventil zum einen ein Druckbegrenzungsventil 36 und ein Nachsaugventil 38 umfaßt. Das Druckbegrenzungsventil 36 öffnet, wenn über die Pumpe 16 weniger Hydraulikflüssigkeit angefordert wird als über die Rücklaufleitung 24 zum Rücklauffilter 26 gelangt und läßt so den Überschuß an Hydraulikflüssigkeit zum Vorratstank 12 durch.

Das antiparallelgeschaltete Nachsaugventil 38 öffnet, wenn die Menge an über die Rücklaufleitung 24 gelieferte Hydraulikflüssigkeit für die Versorgung des Verbrauchers 20 nicht ausreicht. Dabei strömt Hydraulikflüssigkeit direkt aus dem Tank über eine Zweigleitung 40, welche ein Ventilschutzsieb 42 beinhaltet, über das Nachsaugventil und die Saugleitung 32 zur Pumpe 16.

Anströmseitig zum Rücklauffilter 26umfaßt die Rücklaufleitung 24 ein Druckhalteventil 44. Stromauf von dem Druckhalteventil 44 zweigt von der Rücklaufleitung 24 eine Stichleitung 46 ab, welche zu einer Entlüftungsvorrichtung 48 führt, die so ausgebildet ist, daß sie einerseits bei einem Unterdruck in der Hydraulikschaltung kein Gas in das System eindringen läßt, andererseits bei Überdruck in der Hydraulikschaltung Gasanteile aus der Schaltung austreten läßt. Soweit Hydraulikflüssigkeit in die Entlüftungsvorrichtung 48 eintritt, schließt die Entlüftungsvorrichtung den zur Atmosphäre ansonsten offenen Auslaß und verhindert ein Austreten von Hydraulikflüssigkeit.

Ebenfalls stromauf von dem Druckhalteventil 44 zweigt von der Rücklaufleitung 24 eine Bypassleitung 50 ab, welche ein Druckbegrenzungsventil 52 in der Funktion eines Bypassventiles enthält. Dieses Druckbegrenzungsventil 52 öffnet einen Weg von der Rücklaufleitung 24 über die Bypassleitung 50 zum Tank 12, wenn ein Druckanstieg auf der Anströmseite des Rücklauffilters 26 über die festgelegten Normalwerte hinaus erfolgt, so daß eine Beschädigung der hydraulischen Schaltung insbesondere auch des Rücklauffilters bzw. dessen Filterelementes 28 vermieden wird.

Der Verschmutzungsgrad des Filterelementes läßt sich anhand zweier Druckmeßgeräte 54, 55 überprüfen, welche zusammen eine Anzeige über den Druckabfall über das Filterelement liefern, ein Wert, der bei einem verschmutzten Filterelement stark ansteigt und ein Anzeichen für den notwendigen Wechsel des Filterelements liefert.

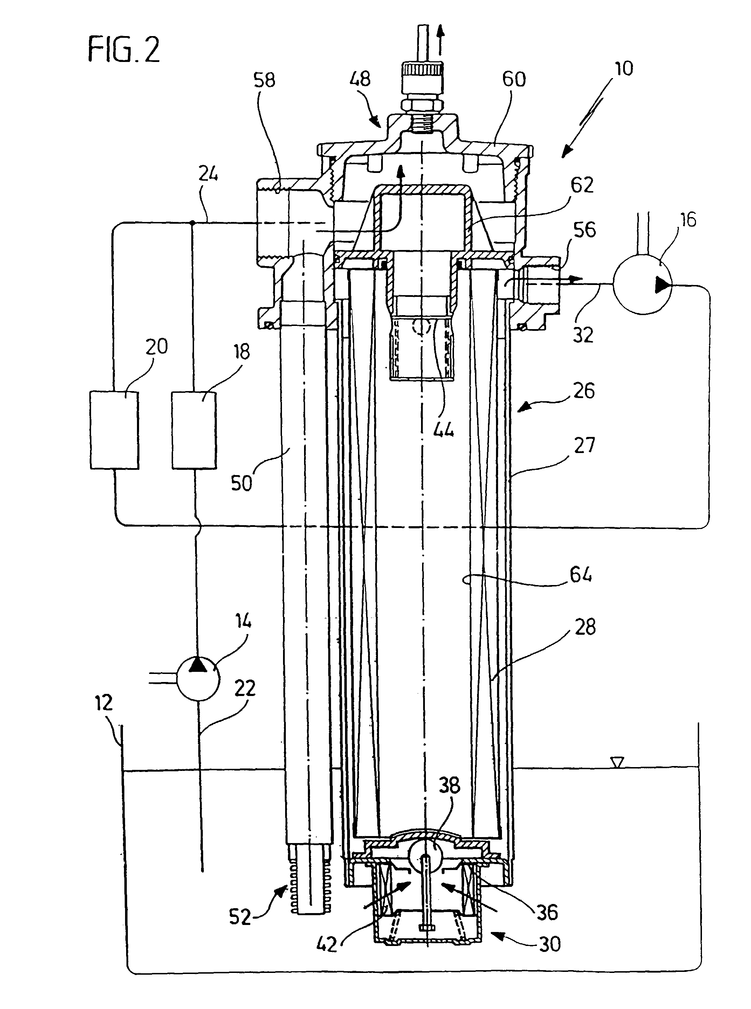

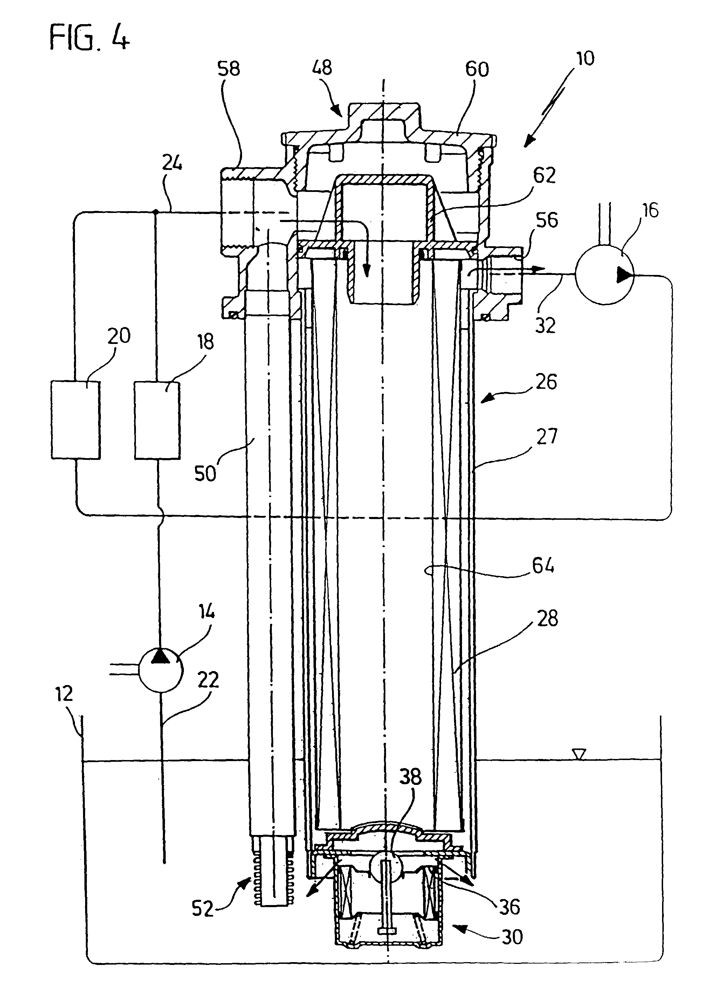

Die Funktionsweise der erfindungsgemäßen hydraulischen Schaltung gemäß Fig. 1 wird anhand der Fig. 2 bis 4 im folgenden noch näher erläutert, wobei die Fig. 2 bis 4 jeweils verschiedene Betriebszustände der hydraulischen Schaltung 10 der Fig. 1 zeigen.

Die Fig. 2, 3 und 4 zeigen die hydraulische Schaltung 10 mit einer detaillierten Darstellung des Rücklauffilters 26 (Darstellung in Schnittansicht) zur Erläuterung der Funktionsweise der Schaltung. Fig. 2 enthält dabei die erste Phase bei der Inbetriebnahme der hydraulischen Schaltung 10, in der der Entlüftungsvorgang beginnt. Beim Starten der Anlage entsteht in der Saugleitung der Pumpe 16 (Saugleitung 32) ein Unterdruck. Bei diesen Bedingungen öffnet das Nachsaugventil 38 (Arbeitspunkt ca. 0,01 bar) und läßt Hydraulikflüssigkeit aus dem Tank 12 über die Zweigleitung 40, das Ventilschutzsieb 42 in einen Raum zwischen dem Gehäuse 27 des Rücklauffilters 26 und dem Filterelement 28 eintreten (vergl. die Pfeile in der Figur), wobei die Hydraulikflüssigkeit, die Reinseite des Rücklauffilters 26 füllt und bis zu einem Auslaß 56 ansteigt, von dem es dann in die Saugleitung 32 und von dort zum Pumpe 16 gelangt. Die von der Pumpe 16 zunächst geförderte Luft gelangt über den zugehörigen Verbraucher 20 und die Rücklaufleitung 24 zu einem Einlaß 58 des Gehäuses 27 (auch Filterkopf genannt) des Rücklauffilters 26, von dem aus sich die Bypassleitung 50 mit dem Druckbegrenzungsventil 52 in Richtung zum Tank 12 verzweigt.

Da das Druckbegrenzungsventil 52 einen Arbeitspunkt von ca. 2,5 bar aufweist, bleibt dieses zunächst geschlossen, so daß das von der Pumpe 16 geförderte Gasvolumen nicht zum Vorratstank 12 gelangen kann. Das Druckhalteventil 44, das im oberen Bereich des Filterelements 28 angeordnet ist und dessen Eingangsseite zunächst verschlossen hält, weist einen Arbeitspunkt von ca. 0,4 bar auf. Solange Luft über den Eingang 58 in das Rücklauffilter 26 einströmt, bleibt das Druckhalteventil 44 zunächst noch geschlossen, da die Entlüftungsvorrichtung 48, welche mit der umgebenden Atmosphäre in Verbindung steht, dem eintretenden bzw. durch sie hindurchtretenden Gas praktisch keinen Widerstand entgegensetzt. Die Entlüftungsvorrichtung 48 ist dabei in einem Deckel 60 des Filtergehäuses 27 angeordnet, wobei der Deckel das obere offene Ende des Gehäuses 27 dichtend verschließt.

In dem Raum unterhalb des Deckels 60 und oberhalb des Filterelements 28 ist ein Einlaufstutzen 62 angeordnet, welcher die Funktion hat, das Luft/Hydraulikflüssigkeits-Gemisch, das gefördert wird bevor die reine Hydraulikflüssigkeit über die Rücklaufleitung 24 in das Filtergehäuse eintritt, zu trennen, so daß über die Entlüftungsvorrichtung 48 lediglich die Gasbestandteile zur Atmosphäre hin abgegeben werden. Der Einlaufstutzen 62 weist dabei eine im wesentlichen zylindrische Form auf und beinhaltet Prallflächen für die Flüssigkeitsanteile in dem Luft-Flüssigkeits-Gemisch. Die Gasanteile steigen nach oben zum Deckel 60 und werden über die Entlüftungsvorrichtung 48 zur Atmosphäre hin abgegeben, während sich die Flüssigkeitsanteile in dem Zulaufstutzen zu dem Druckhalteventil 44 sammeln. Sobald der Arbeitspunkt für das Druckhalteventil 44 erreicht ist, öffnet dieses und läßt die Hydraulikflüssigkeit in das Innere 64 des Filterelements 28 eintreten.

Im Innern des Filterelements 68 verdrängt die Hydraulikflüssigkeit zunächst das dort noch vorhandene Gasvolumen in dem Zwischenraum zwischen dem Filterelement 28 und dem Gehäuse 27, welches dann ebenfalls über die Pumpe 16, den Verbraucher 20 in die Rücklaufleitung 24 befördert wird, von der es dann über den Einlaß 58 zum Einfüllstutzen 62 gelangt, wo die Gasanteile wiederum über die Entlüftungsvorrichtung 48 zur Atmosphäre hin abgegeben werden.

Weniger kompliziert verläuft die Anlaufphase für die Pumpe 14, die bereits nach kurzer Zeit Hydraulikflüssigkeit aus dem Tank 12 über die Saugleitung 22 zieht. Die zunächst vorhandenen Gasanteile werden über den Verbraucher 18 zur Rücklaufleitung 24 gefördert und gelangen von dort in gleicher Weise wie zuvor beschrieben über den Einfüllstutzen 62 zur Entlüftungsvorrichtung 48 und zur umgebenden Atmosphäre.

Aufgrund der Trennfunktion der Entlüftungsvorrichtung 48, die zwischen Gas- und Flüssigkeitsanteilen unterscheidet und lediglich Gasanteile durchläßt, ist es möglich, den Anlaufvorgang automatisch zu betreiben, so daß keine Entlüftung der Pumpen, der Verbraucher, der Filtergehäuse etc. von Hand mehr vorgenommen werden müssen.

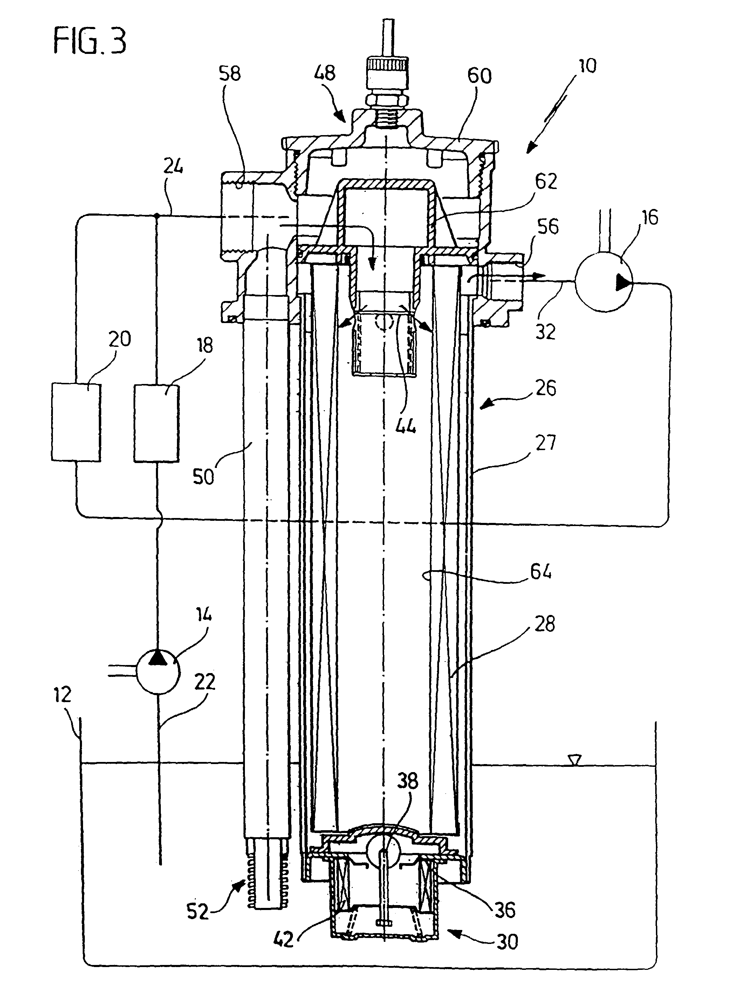

Fig. 3 zeigt eine direkt auf den Entlüftungsvorgang folgende Phase, bei der das Innere des Filtergehäuses 27 mit Hydraulikflüssigkeit gefüllt ist und ausreichend Druck im Filtergehäuse 27 vorhanden ist, so daß das Nachsaugventil 38 geschlossen gehalten wird. Der über die Rücklaufleitung 24 zurückfließende Strom an Hydraulikflüssigkeit tritt in den Einlaufstutzen 62 ein und wird dort zum Druckhalteventil 44 gelenkt, welches öffnet und den Strom an Hydraulikflüssigkeit in das Innere 64 des Filterelements 28 austreten läßt. Die über das Filterelement 28 gefilterte Hydraulikflüssigkeit schließlich sammelt sich im Zwischenraum zwischen dem Filterelement 28 und der Gehäusewandung des Gehäuses 27 und fließt über den Auslaß 56, die Saugleitung 32 zur Pumpe 16.

Für den Folgebetrieb kann der Deckel 60 ebenso wie der Einlaufstutzen 62 ausgetauscht werden, welchletzterer das Druckhalteventil 44 mit beinhaltet. Der Einlaufstutzen 62 wird dabei durch einen Einlaufstutzen 66 ersetzt, welcher ähnlich ausgebildet ist wie der Einlaufstutzen 62, jedoch an seinem unteren, in das Innere 64 des Filterelements 28 reichenden Ende einen freien Querschnitt aufweist anstelle des beim Einfüllstutzen 62 dort befestigten Druckhalteventils 44. Anstelle des Deckels 60 der eine Entlüftungsvorrichtung integriert enthält, wird ein einfacher Verschluß 68 auf das obere Ende des Gehäuses 27 aufgeschraubt. Durch das Auswechseln des Einlaufstutzens 62 durch den vereinfachten Einlaufstutzen 66 wird der Strömungswiderstand für die rücklaufende Hydraulikflüssigkeit im Filtergehäuse 27 minimiert.

Laufen die beiden Pumpen 14 und 16 parallel, so ist der rückfließende Volumenstrom über die Rücklaufleitung QI + QII größer als der von der Pumpe 16 von der Reinseite des Rücklauffilters 26 abgenommene Volumenstrom QI, so daß sich über den im Filtergehäuse 27 aufbauende Hydraulikflüssigkeitsdruck das Druckbegrenzungsventil 36 öffnet und so für einen Volumenstrom QII einen Durchtritt aus dem Gehäuse 27 des Rücklauffilters 27 zum Vorratstank 12 schafft.

Das Druckbegrenzungsventil 52 arbeitet erst, wenn eingangsseitig des Filtergehäuses 27 (Eingang 58) ein Druckanstieg aufgrund eines verschmutzten Filterelements 28 erfolgt, der den Arbeitspunkt des Druckbegrenzungsventils 52 übersteigt. Dieses öffnet dann, um eine Beschädigung der hydraulischen Schaltung und insbesondere auch des Filterelements 28 zu vermeiden, und läßt den Volumenstrom an Hydraulikflüssigkeit direkt in den Vorratstank 12 eintreten, ohne daß die Hydraulikflüssigkeit das Filterelement 28 passieren muß.

## Patentansprüche

1. Hydraulische Schaltung mit einem Vorrat an Hydraulikflüssigkeit, welche über eine Pumpe einem Hydraulikverbraucher zur Verfügung gestellt wird, und mit einem ein Filtergehäuse und ein Filterelement umfassenden Rücklauffilter zum Filtern der von dem Verbraucher in einer Rücklaufleitung rücklaufenden Hydraulikflüssigkeit, dadurch gekennzeichnet, daß die Rücklaufleitung (24) vor Eintritt in das Rücklauffilter (26) ein erstes Druckhalteventil (44) umfaßt, welches den Rücklauf der Hydraulikflüssigkeit erst beim Überschreiten eines vorgegebenen ersten Druckwerts zum Rücklauffilter (26) erlaubt, daß die Rücklaufleitung (24) stromauf zum ersten Druckhalteventil (44) mit einer zur Atmosphäre führenden Entlüftungsvorrichtung (48) und mit einer ein zweites Druckhalteventil (52) enthaltenen Bypassleitung (50) verbunden ist, welche in den Hydraulikflüssigkeitsvorrat (12) mündet, wobei das zweite Druckhalteventil (52) erst beim Überschreiten eines vorgegebenen zweiten Druckwerts öffnet und den Rücklauf der Hydraulikflüssigkeit am Rücklauffilter (26) vorbei zum Hydraulikflüssigkeitsvorrat (12) gestattet, wobei der zweite Druckwert größer ist als der erste Druckwert, und daß die Entlüftungsvorrichtung (48) ein Ausströmen von Gas in die Atmosphäre erlaubt, jedoch den Austritt von Hydraulikflüssigkeit verhindert.

2. Hydraulische Schaltung nach Anspruch 1, dadurch gekennzeichnet, daß die Entlüftungsvorrichtung (48) ein Eindringen von Gas in die Schaltung (10) verhindert.

3. Hydraulische Schaltung nach Anspruch 1 oder 2, dadurch gekennzeichnet, daß die Entlüftungsvorrichtung (48) und das erste Druckhalteventil (44) baulich eine Einheit bilden, welche nach Abschluß der Entlüftung der Schaltung (10) entfernbar ist.

4. Hydraulische Schaltung nach Anspruch 3, dadurch gekennzeichnet, daß die bauliche Einheit in einen Verschluß des Filtergehäuses (27) des Rücklauffilters (26) integriert ist.

5. Hydraulische Schaltung nach Anspruch 1 oder 2, dadurch gekennzeichnet, daß das erste Druckhalteventil (44) am Einlaß des Filterelements (28) befestigt ist.

6. Hydraulische Schaltung nach Anspruch 1, 2 oder 5, dadurch gekennzeichnet, daß die Entlüftungsvorrichtung (48) in einen Verschluß (60) des Filtergehäuses (27) integriert ist.

7. Hydraulische Schaltung nach einem der Ansprüche 1 bis 6, dadurch gekennzeichnet, daß die Entlüftungsvorrichtung (48) permanent gasdicht verschließbar ist.

## Claims

1. A hydraulic circuit with a reservoir of hydraulic fluid which is made available via a pump to a hydraulic consumer, and with a return-line filter comprising a filter housing and a filter element for filtering the hydraulic fluid retuning from the consumer in a return line,
**characterised in that** the return line (24), before entering the return-line filter (26), comprises a first pressure-maintaining valve (44), which allows the return of the hydraulic fluid to the return-line filter (26) only when a predetermined first pressure value is exceeded,
in that the return line (24) is connected upstream from the first pressure-maintaining valve (44) with a degassing device (48) leading to the atmosphere and with a bypass line (50) containing a second pressure-maintaining valve (52) and opening into the hydraulic fluid reservoir (12), wherein the second pressure-maintaining valve (52) only opens if a predetermined second pressure value is exceeded and permits the return flow of hydraulic fluid past the return-line filter (26) to the hydraulic fluid reservoir (12), the second pressure value being larger than the first pressure value,
**and in that** the degassing device (48) allows gas to escape into the atmosphere, but prevents the egress of hydraulic fluid.

2. A hydraulic circuit according to Claim 1,
**characterised in that** the degassing device (48) prevents a penetration of gas into the circuit (10).

3. A hydraulic circuit according to Claim 1 or 2,
**characterised in that** the degassing device (48) and the first pressure-maintaining valve (44) structurally form one unit, which can be removed after the end of the degassing of the circuit (10).

4. A hydraulic circuit according to Claim 3,
**characterised in that** the structural unit is integrated in a closure of the filter housing (27) of the return-line filter (26).

5. A hydraulic circuit according to Claim 1 or 2,
**characterised in that** the first pressure-maintaining valve (44) is attached to the inlet of the filter element (28).

6. A hydraulic circuit according to Claim 1, 2 or 5,
**characterised in that** the degassing device (48) is integrated in a closure (60) of the filter housing (27).

7. A hydraulic circuit according to one of Claims 1 to 6,
**characterised in that** the degassing device (48) can be permanently closed in gas-tight manner.

## Revendications

1. Circuit hydraulique équipé d'une réserve de liquide hydraulique, qui est mise à la disposition d'in appareil d'utilisation hydraulique par l'intermédiaire d'une pompe, et d'un filtre de retour comprenant un boîtier de filtre et un élément de filtre en vue de la filtration du liquide hydraulique refluant depuis l'appareil d'utilisation dans une canalisation de retour, caractérisé en ce que la canalisation de retour (24) comprend en amont de l'entrée du filtre de retour (26) une première soupape de maintien de pression (44), qui ne permet le reflux du liquide hydraulique que lors du dépassement d'une première valeur de pression prescrite vers le filtre de retour (26), en ce que la canalisation de retour (24) en amont de la première soupape de maintien de pression (44) est reliée à un dispositif de purge d'air (48) conduisant à l'atmosphère et à une canalisation de dérivation (50) contenant une seconde soupape de maintien de pression (52), qui débouche dans la réserve de liquide hydraulique (12), la seconde soupape de maintien de pression (52) ne s'ouvrant que lors du dépassement d'une seconde valeur de pression prescrite et permettant le reflux du liquide hydraulique à travers le filtre de retour (26) en direction de la réserve de liquide hydraulique (12), la seconde valeur de pression étant supérieure à la première valeur de pression, et en ce que le dispositif de purge d'air (48) permet un échappement de gaz dans l'atmosphère, en empêchant cependant l'échappement de liquide hydraulique.

2. Circuit hydraulique selon la revendication 1, caractérisé en ce que le dispositif de purge d'air (48) empêche une pénétration de gaz dans le circuit (10).

3. Circuit hydraulique selon la revendication 1 ou 2, caractérisé en ce que le dispositif de purge d'air (48) et la première soupape de maintien de pression (44) constituent une unité structurale, qui peut être supprimée à la fin de la purge d'air du circuit (10).

4. Circuit hydraulique selon la revendication 3, caractérisé en ce que l'unité structurale est intégrée dans une fermeture du boîtier de filtre (27) du filtre de retour (26).

5. Circuit hydraulique selon la revendication 1 ou 2, caractérisé en ce que la première soupape de maintien de pression (44) est fixée à l'admission de l'élément de filtre (28).

6. Circuit hydraulique selon la revendication 1, 2 ou 5, caractérisé en ce que le dispositif de purge d'air (48) est intégré dans une fermeture (60) du boîtier de filtre (27).

7. Circuit hydraulique selon l'une des revendications 1 à 6, caractérisé en ce que le dispositif de purge d'air (48) peut être fermé en permanence de façon étanche au gaz.
